(19) Europäisches Patentamt / European Patent Office / Office européen des brevets

(11) EP 3 420 533 B1

(12) EUROPÄISCHE PATENTSCHRIFT

(45) Veröffentlichungstag und Bekanntmachung des Hinweises auf die Patenterteilung:
25.12.2019 Patentblatt 2019/52

(21) Anmeldenummer: 18726936.0

(22) Anmeldetag: 09.05.2018

(51) Int Cl.:
G06T 7/80 (2017.01)     G01P 5/20 (2006.01)

(86) Internationale Anmeldenummer:
PCT/EP2018/062098

(87) Internationale Veröffentlichungsnummer:
WO 2018/210672 (22.11.2018 Gazette 2018/47)

(54) **VERFAHREN ZUM KALIBRIEREN EINES OPTISCHEN MESSAUFBAUS**

METHOD FOR CALIBRATING AN OPTICAL MEASUREMENT SET-UP

PROCÉDÉ D'ÉTALONNAGE D'UN SYSTÈME DE MESURE OPTIQUE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 15.05.2017 DE 102017110533

(43) Veröffentlichungstag der Anmeldung:
02.01.2019 Patentblatt 2019/01

(73) Patentinhaber: LaVision GmbH
37081 Göttingen (DE)

(72) Erfinder: WIENEKE, Bernhard
37073 Göttingen (DE)

(74) Vertreter: Schneider, Peter Christian
Fiedler, Ostermann & Schneider
Patentanwälte
Obere Karspüle 41
37073 Göttingen (DE)

(56) Entgegenhaltungen:
US-A1- 2004 183 909

• WIENEKE B: "Stereo-PIV using self-calibration on particle images", EXPERIMENTS IN FLUIDS ; EXPERIMENTAL METHODS AND THEIR APPLICATIONS TO FLUID FLOW, SPRINGER, BERLIN, DE, Bd. 39, Nr. 2, 1. August 2005 (2005-08-01), Seiten 267-280, XP019338232, ISSN: 1432-1114, DOI: 10.1007/S00348-005-0962-Z

**Beschreibung**

Gebiet der Erfindung

Die Erfindung bezieht sich auf ein Verfahren zum Kalibrieren eines optischen Messaufbaus mit einem mit Partikeln beimpften Messvolumen und mit wenigstens zwei Kameras, mittels derer das Messvolumen unter unterschiedlichen Betrachtungswinkeln mit je einer aus einer Vorkalibrierung bekannten Abbildungsfunktion abbildbar ist, umfassend den Schritt:

a) zeitgleiches Abbilden des Messvolumens mittels der Kameras zur Erzeugung je eines Kamerabildes für jede Kamera.

Stand der Technik

Ein derartiges Kalibrierverfahren ist bekannt aus der EP 1 926 049 B1.

Zur Vermessung von Strömungen ist es bekannt, das strömende Fluid mit optisch detektierbaren Partikeln zu beimpfen und mittels Kameras zu beobachten. Ein von dem Fluid durchströmtes Messvolumen wird dabei von mehreren Kameras unter unterschiedlichen Beobachtungswinkeln beobachtet. Um präzise Aussagen über die Details der Strömung machen zu können, ist es erforderlich, die Position der Partikel, welche als repräsentativ für die Strömung angesehen werden, im Messvolumen exakt bestimmen zu können. Hierzu dient der oben skizzierte, stereoskopische Ansatz, bei dem Teilchenpositionen im Messvolumen anhand von unter unterschiedlichen Winkeln gleichzeitig aufgenommenen Kamerabildern berechnet werden können. Wesentlich hierfür ist die präzise Kenntnis der sogenannten Abbildungsfunktion jeder Kamera, d.h. derjenigen Funktion, die eine dreidimensionale Position im Messvolumen mit der entsprechenden zweidimensionalen Position im Kamerabild in Beziehung setzt. Die Abbildungsfunktion M lässt sich in allgemeiner Form schreiben als

$$\begin{pmatrix} x_i \\ y_i \end{pmatrix} = M_i(X,Y,Z) = \begin{pmatrix} M_{ix}(X,Y,Z) \\ M_{iy}(X,Y,Z) \end{pmatrix},$$

wo der Index i eine spezielle Kamera identifiziert, x, y die zweidimensionalen Koordinaten im zugeordneten Kamerabild bezeichnen und X, Y, Z die (auch "Welt"-Koordinaten genannten) Raumkoordinaten im Messvolumen bezeichnen.

Die Bestimmung dieser Abbildungsfunktionen wird als Kalibrierung bezeichnet.

Aus der oben genannten, gattungsbildenden Druckschrift ist ein zweistufiges Kalibrierverfahren bekannt. Zunächst wird eine Vorkalibrierung durchgeführt, die typischerweise mittels sogenannter Kalibrierplatten erfolgt. Hierzu wird eine mit bekannten Markierungen versehene Struktur in das Messvolumen eingebracht und mittels der Kameras abgebildet. Durch Vergleich der Kamerabilder mit der bekannten Struktur können die entsprechenden Abbildungsfunktionen berechnet werden. Diese Vorkalibrierung ist jedoch vergleichsweise grob und bedarf, um für bestimmte Präzisionsmessungen tauglich zu sein, noch einer Korrektur, d.h. der Änderung der Abbildungsfunktion M in eine korrigierte Abbildungsfunktion M'. Ebenso tritt der Fall auf, dass in der Zeit zwischen Vorkalibrierung und der eigentlichen Messung sich der optische Aufbau z.B. durch mechanische Instabilitäten verändert, oder auch laufend während der Messung es zu Änderungen in der Abbildungsgleichung z.B. durch Vibrationen kommt.

Zur Korrektur der vorkalibrierten Abbildungsfunktionen schlägt die genannte Druckschrift die Anwendung bekannter Triangulationsverfahren vor. Zunächst ist die Abbildung eines ausgewählten Partikels in allen Kamerabildern erforderlich. Durch Inversion der Abbildungsfunktion wird sodann die Sichtlinie bestimmt, auf der ein Partikel im Messvolumen liegen könnte, um an der tatsächlichen Abbildungsstelle im Kamerabild abgebildet zu werden (wegen des Dimensionsunterschiedes zwischen zweidimensionalem Kamerabild und dreidimensionalem Messvolumen ist eine eindeutige Punktzuordnung durch Inversion der Abbildungsfunktion nicht möglich). Die erfolgt unter der Annahme, dass die Abbildungsfunktion korrekt ist. Bei tatsächlich korrekt bestimmten Abbildungsfunktionen treffen sich die Sichtlinien aller Kameras in einem Punkt im Messvolumen, nämlich bei der tatsächlichen Position des Partikels, was jedoch nach der groben Vorkalibrierung regelmäßig nicht der Fall ist. Die genannte Druckschrift schlägt daher vor, denjenigen Punkt im Messvolumen mit dem geringsten Abstand zu allen berechneten Sichtlinien als "wahre" Position des Partikels anzunehmen und seine Abstände von den Sichtlinien zur Korrektur der jeweiligen Abbildungsfunktion heranzuziehen. Man spricht hierbei von einer Volumen-Selbstkalibrierung, da die Korrektur der Kalibrierung mit aus der Messung selbst gewonnenen Parametern erzielt wird. Ein- oder mehrmaliger Durchlauf dieser Selbstkalibrierung führt zu korrekten Abbildungsfunktionen.

Nachteilig bei dem bekannten Verfahren ist die Notwendigkeit, die Abbildungen eines Partikels im Messvolumen in sämtlichen Kamerabildern eindeutig zu identifizieren und einander zuzuordnen. Dieser bei geringen Teilchendichten erfolgreiche Ansatz ist bei höheren Teilchendichten nicht mehr umsetzbar, zumal die Anzahl sogenannter Geisterteilchen, d.h. scheinbaren Abbildungen tatsächlich nichtexistenter Teilchen in den Kamerabildern mit steigender Teilchendichte weit überproportional ansteigt.

Aus der Bildverarbeitungstechnik allgemein ist die sogenannte Entzerrung (Dewarping) von Kamerabildern bekannt, die auch als Rektifizierung bezeichnet wird. Dieser Begriff soll auch vorliegend Anwendung finden. Die Rektifizierung eines Kamerabildes erfolgt stets in Bezug auf eine reale oder gedachte Ebene im beobachteten Volumen, d. h. vorliegend im Messvolumen. Sofern die optische Achse einer Kamera nicht exakt mit der zentralen Normalen der Referenzebene zusammenfällt, ergeben sich bei der Abbildung geometrische Verzerrungen in Abhängigkeit vom speziellen Beobachtungswinkel. Hinzu kommen optische Verzerrungen durch das Kameraobjektiv, die jedoch bei hinreichend guter Optik und hinreichend kleinem Messvolumen weitgehend vernachlässigbar sind. Die bei der Abbildung auftretenden Verzerrungen sind in der zugeordneten Abbildungsfunktion berücksichtigt. Mit Rektifizierung wird eine Umrechnung des Kamerabildes bezeichnet, die das aufgenommene Kamerabild so verändert, dass es demjenigen (virtuellen) Bild entspricht, welches entstanden wäre, wenn die Kamera bei der Aufnahme des Bildes in ihrer oben erläuterten Idealausrichtung zur Referenzebene gestanden hätte, wobei dies jedoch nur für die Abbildungen derjenigen Partikel zutrifft, die tatsächlich in der Referenzebene liegen. Für die "vor" bzw. "hinter" der Referenzebene liegenden Partikel führt die Rektifizierung aufgrund der Parallaxe nicht zwingend dazu, dass ihre rektifizierte Abbildungsposition derjenigen bei tatsächlicher Abbildung unter Idealausrichtung der Kamera entspricht. Wesentlich im vorliegenden Kontext sind die dem Fachmann bekannten Zusammenhänge, wonach zum einen die Rektifizierung stets in Bezug auf eine speziell gewählte Referenzebene erfolgt und zum anderen die Abbildungsfunktionen in die Rektifizierung eingehen.

Als Beispiel für eine Rektifizierung wird hier die Berechnung für die Z=0-Ebene und für Kamera 1 gegeben. Die Intensität jedes Punktes (oder Pixels) an der Stelle (X,Y,Z=0) im entzerrten Bild ist dabei durch die räumlich korrespondierende Intensität im ursprünglichen Kamerabild gegeben:

$$Ir_1(X,Y) = I_1( x_1, y_1 ) = I_1( M_{1x}(X,Y,Z=0), M_{1y}(X,Y,Z=0) ).$$

Man beachte, dass die Koordinaten X und Y dieselben "Welt"-Koordinaten X und Y sind, die auch der Bestimmung einer räumlichen Position (X, Y, Z) im Messvolumen dienen. Die Rektifizierung stellt damit eine Transformation von den Kamerabild-Koordinaten x, y zu den "Welt"-Koordinaten X, Y dar.

Weiter ist aus der EP 1 460 433 B1 die Berechnung zweidimensionaler Korrelationen zwischen Kamerabildern bekannt. Das in der genannten Druckschrift offenbarte Verfahren, welches lediglich auf durch einen sogenannten Lichtschnitt definierte Messvolumina in Form einer dünnen Scheiben anwendbar ist und bei dreidimensional ausgedehnten Messvolumina versagt, werden die von unter unterschiedlichen Beobachtungswinkeln aufgenommenen Kamerabilder interrogationsfeldweise miteinander korreliert, was in jedem Interrogationsfeld zu einem Korrelations-Peak führt. Dessen Abstand vom Koordinatenursprung des Korrelations-Interrogationsfeldes wird als Maß für eine Korrektur der Abbildungsfunktion in dem von dem Interrogationsfeld repräsentierten Bereich des scheibenförmigen Messvolumens herangezogen.

## Aufgabenstellung

Es ist die Aufgabe der vorliegenden Erfindung, ein zu dem gattungsgemäßen Selbstkalibrierungsverfahren alternatives Verfahren vorzuschlagen, welches sich insbesondere für höhere Teilchendichten in dreidimensional ausgedehnten Messvolumina eignet.

## Darlegung der Erfindung

Diese Aufgabe wird in Verbindung mit den Merkmalen des Oberbegriffs von Anspruch 1 gelöst durch die weiteren Schritte:

b) Rektifizieren jedes Kamerabildes in Bezug auf eine gemeinsame Referenzebene im Messvolumen unter Verwendung der jeweils zugeordneten, vorkalibrierten Abbildungsfunktion,
c) Durchführen einer zweidimensionalen Korrelation für wenigstens ein Paar von rektifizierten Kamerabildern zur Erzeugung einer entsprechenden Anzahl von Korrelationsfeldern, wobei jedes Korrelationsfeld ein länglich geformtes Korrelationsmaxima-Band zeigt,
d) für jedes Korrelationsfeld:

d1) Reduzieren des Korrelationsmaxima-Bandes auf eine für dieses repräsentative Gerade,
d2) Ermitteln des Abstandes dieser repräsentativen Geraden vom Koordinatenursprung des Korrelationsfeldes als Korrekturwert,

e) Korrigieren der Abbildungsfunktionen derjenigen Kameras, deren rektifizierte Kamerabilder in die Korrelationen in Schritt c einbezogen waren, mit den ermittelten Korrekturwerten.

Bevorzugte Ausführungsformen sind Gegenstand der abhängigen Patentansprüche.

Zunächst wird also eine gemeinsame Referenzebene für alle Kameras ausgewählt. Diese liegt sinnvollerweise zentral im Messvolumen. Ihre spezielle Wahl ist jedoch für das grundlegende Funktionsprinzip der Erfindung nicht von Belang. Günstig ist es, für sie Z=0 zu definieren. Sodann wird jedes aufgenommene Kamerabild in Bezug auf diese gemeinsame Referenzebene rektifiziert, wie dies dem Fachmann grundsätzlich bekannt ist. Wie eingangs erläutert, fließen die aktuellen Abbildungsfunktionen in die Rektifizierung ein, sodass die rektifizierten Bilder implizit die Information über die mittels des erfindungsgemäßen Verfahrens zu überprüfenden bzw. zu korrigierenden Abbildungsfunktionen enthalten, ohne dass, wie beim Stand der Technik gemäß EP 1 926 049 B1, eine Identifizierung einander zugeordneter Partikelabbildungen und eine anschließende, explizite Triangulation erforderlich wären. Aus den Kamerabildern $I_i$ werden somit die rektifizierten Kamerabilder $Ir_i$.

Sodann wird zwischen jeweils zwei rektifizierten Kamerabildern eine zweidimensionale Korrelation durchgeführt, wie dies dem Fachmann ebenfalls grundsätzlich bekannt ist. Unter Korrelation sei hier allgemein ein Ähnlichkeitsoperator bzw. dessen Anwendung verstanden. Besonders vorteilhaft kommt hierbei die Standard-Kreuzkorrelation der allgemeinen Form

$$C_{ij}(dx, dy) = \sum_{x,y} Ir_i(X, Y) Ir_j(X + dx, Y + dy)$$

zum Einsatz, die hier verkürzend als "Kreuzkorrelation" bezeichnet wird. Dem Fachmann sind vergleichbare Funktionen wie LSM (least-square-matching) oder ZNSSD (zeroaveraged normalized sum-of-square-differences) bekannt, die neben weiteren anderen ebenfalls als Ähnlichkeitsoperatoren im Kontext der vorliegenden Erfindung einsetzbar sind. Der Begriff des Korrelationsmaximums ist entsprechend als eine Relativverschiebung der miteinander korrelierten Bilder (ein Punkt im Korrelationsfeld) zu verstehen, die zu einer im Vergleich zu benachbarten Relativverschiebungen besonders starken Übereinstimmung der miteinander korrelierten Bilder führt. Bei Anwendung einer Kreuzkorrelation gemäß obiger Formel ist dies in der Tat auch mit einem (lokalen) mathematischen Maximalwert im (Kreuz-) Korrelationsfeld verbunden; bei Anwendung von auf Minimierungsalgorithmen beruhenden Ähnlichkeitsoperatoren resultieren mathematisch entsprechende (lokale) Minima im Korrelationsfeld. Auch sind dem Fachmann geeignete Bildvorverarbeitungsschritte wie der Abzug der Hintergrundintensität bekannt, die die Qualität der Korrelation verbessern.

Die Korrelation kann einheitlich auf dem gesamten rektifizierten Kamerabild oder, wie bevorzugt vorgesehen, zwischen einzelnen, einander zugeordneten Interrogationsfeldern (hierzu später mehr) durchgeführt werden. Jede durchgeführte Korrelation liefert ein Korrelationsfeld $C_{ij}$, welches eine Vielzahl von möglicherweise überlappenden Korrelations-Peaks aufweist. Diese entstehen durch die Korrelation zwischen einem Teilchenbild im ersten Bild mit einem Teilchenbild im zweiten Bild. Dabei können die beiden Teilchenbilder zu demselben Teilchen im Volumen gehören (korrekte Zuordnung) oder von zwei verschiedenen Teilchen herrühren (Geisterpartikel bzw. Geisterkorrelationen). Soweit diese Korrelations-Peaks von Geister-Partikeln herrühren, sind sie weitgehend zufällig über das Korrelationsfeld verteilt. Diejenigen Korrelations-Peaks, die von realen Partikeln herrühren, erstrecken sich in einem länglich geformten schmalen Band über das Korrelationsfeld. Der Erstreckungswinkel des Bandes relativ zum Koordinatensystem des Korrelationsfeldes ist dabei im Wesentlichen durch die geometrische Relativ-Anordnung der in die Korrelation einbezogenen Kameras bedingt und kann aus der Abbildungsfunktion berechnet werden. Die maximale Länge des Bandes ist durch die Tiefe des Messvolumens bzw. Länge der Sichtlinie der Kameras im Messvolumen bestimmt. Üblicherweise ist diese Länge weiter durch die Größe der Korrelationsfelder eingeschränkt. Zum Beispiel mit einer Korrelationsfeldgröße von 64x64 Pixeln (dx,dy < ± 32 Pixel) zeigt das Korrelationsband nur die Teilchenkorrelationen in einem kleinen (Z-)Bereich um die Referenzebene herum. Dies ermöglicht, wie später dargestellt, die selektive unterschiedliche Korrektur der Abbildungsgleichung für mehrere Ebenen im Messvolumen. Die Breite des Bandes ergibt sich im Wesentlichen aus der Größe der Teilchenbilder mal $\sqrt{2}$. Der Abstand vom Koordinatenursprung des Korrelationsfeldes (dx=0, dy=0) ist hingegen durch Ungenauigkeiten in der bei der Rektifizierung angewandten Abbildungsfunktion bedingt. Diese Zusammenhänge stellen die wesentlichen Erkenntnisse des Erfinders dar, deren Umsetzung in ein praktisches Kalibrierverfahren den Kern der vorliegenden Erfindung darstellt.

Die Ausnutzung der erkannten Zusammenhänge erfolgt erfindungsgemäß, indem das besagte Korrelationsmaxima-Band auf eine repräsentative Gerade reduziert wird.

Sodann wird der Abstand $d_{ij}$ der ermittelten, repräsentativen Geraden vom Koordinatenursprung des Korrelationsfeldes $C_{ij}$ ermittelt. Der üblichen Definition von "Abstand" folgend wird die senkrechte Entfernung zwischen der repräsentativen Geraden und dem Koordinatenursprung gemessen.

Eine einfache Methode, die die funktionalen Schritte der Geradenbestimmung und der Bestimmung deren Abstandes zum Koordinatenursprung zu einem einzigen praktischen Berechnungsschritt kombiniert, besteht darin, für alle Abstände d vom Ursprung *senkrecht* zur (bekannten) Geradenrichtung eine Summation der Korrelationsintensitäten *entlang* der Geradenrichtung vorzunehmen. Der Abstand $d_{ij}$ der Geraden entspricht dann dem Abstand mit dem Maximum der summierten Intensitäten. Andere Bildverarbeitungsmethoden sowie übliche Fehlerquadrat-Minimierungsverfahren sind in der Fachwelt bekannt. Bei für Strömungsmessungen typischen Teilchendichten hat es sich als hinreichend erwiesen, wenn sämtliche Korrelationswerte des Korrelationsfeldes in die Geradenberechnung eingezogen werden. Denkbar ist jedoch auch eine Vorselektion durch Anlegen eines Intensitäts-Schwellenwertes und/oder durch Nicht-Berücksichtigung der in den Randbereichen des Korrelationsfeldes positionierten Korrelations-Peaks. Da sich das erfindungsgemäße Verfahren jedoch als überraschend robust herausgestellt hat, ist eine solche Vorselektion in den meisten Fällen nicht erforderlich.

Typischerweise sind die Koordinatenachsen X, Y der rektifizierten Kamerabilder in Positionseinheiten der Dimension "Pixel" unterteilt, die mit einer Skalierung auf Längeneinheiten wie mm konvertiert werden können. Auch die Koordinatenachsen dx, dy der Korrelationsfelder sind daher typischerweise in Verschiebungseinheiten der Dimension "Pixel" unterteilt. In diesem Kontext ergibt sich auch der Abstandswert zwischen repräsentativer Geraden und Koordinatenursprung in der Dimension "Pixel". Bevorzugt wird der Abstand vektoriell ermittelt, d.h. als ein vom Koordinatenursprung ausgehender Vektor $d_{ij}$, dessen Richtung durch seine oben erläuterte, senkrechte Lage zur repräsentativen Geraden und dessen Länge durch den oben erläuterten Abstandswert vorgegeben wird. Dadurch lassen sich die zu den Koordinatenachsen parallelen Abstandskomponenten $d_{ij\_x}$ und $d_{ij\_y}$ separat bestimmen.

Der ermittelte Abstand wird sodann als Korrekturwert für die Abbildungsfunktionen genutzt und zwar jeweils für die Abbildungsfunktionen derjenigen Kameras i und j, deren rektifizierte Kamerabilder $Ir_i$ und $Ir_j$ in die den besagten Korrekturwert $d_{ij}$ ergebende Korrelation $C_{ij}$ einbezogen waren. Die konkrete Korrekturmaßnahme der Abbildungsfunktionen auf Basis des ermittelten Korrekturwertes kann unterschiedlich ausfallen. Als eine vorteilhafte Korrekturvorschrift hat sich in diesem Zusammenhang eine einfache Translation der Abbildungsgleichung erwiesen, bei der die korrigierte Abbildungsgleichung M' durch

$$M_i'(X, Y, Z) = M_i(X - \Delta X_i, Y - \Delta Y_i, Z - \Delta Z_i)$$

für jede Kamera i gegeben ist. Dabei stehen die ermittelten Abstände $d_{ij}$ in einem bekannten Funktionszusammenhang mit den noch zu bestimmenden Translationen $(\Delta X_i, \Delta Y_i, \Delta Z_i)$.

Für den Fall von zwei Kameras mit einem einzigen berechneten Abstand $d_{12}$ ergibt sich eine einfache Lösung durch $\Delta X_1 = d_{12\_x}/2$, $\Delta Y_1 = d_{12\text{-}y}/2$, $\Delta X_2 = -d_{12\_x}/2$, $\Delta Y_2 = -d_{12\_y}/2$, $\Delta Z_1 = \Delta Z_2 = 0$. Für den Fall von drei Kameras mit drei gemessenen Abständen $d_{12}$, $d_{13}$ und $d_{23}$ kann man z.B. Kamera 1 als Referenzkamera mit $\Delta X_1 = \Delta Y_1 = \Delta Y_1 = 0$ nehmen sowie die verbleibenden sechs Unbekannten $(\Delta X_2, \Delta Y_2, \Delta Z_2, \Delta X_3, \Delta Y_3, \Delta Z_3)$ dadurch berechnen, dass man als drei Nebenbedingungen $\Sigma\Delta X_i = \Sigma\Delta Y_i = \Sigma\Delta Z_i = 0$ hinzunimmt. Dies ist vorteilhaft um eine mögliche Koordinatentransformation zu minimieren, da jede für alle Kameras gleiche Verschiebung $(\Delta X, \Delta Y, \Delta Z)$, die einer Translation des Koordinatenursprungs entspricht, ein freier Parameter ist, der die Korrelationsfelder und die gemessenen Abstände $d_{ij}$ nicht verändert, zumindest bei nicht zu großen Verschiebungen. Auch für mehr als drei Kameras sind vorteilhafte Lösungsansätze dem Fachmann bekannt.

Die Erfindung liefert somit ein bei vielen Kameras mit hoher Pixel-Auflösung zwar rechenintensives aber leicht durchführbares und überraschend robustes Selbstkalibrierungs-Verfahren, welches den Besonderheiten von hohen Teilchendichten in echten Messvolumina, deren Ausdehnung in allen drei Raumrichtungen in etwa in der gleichen Größenordnung liegt, gerecht wird.

Wie aus den obigen Erläuterungen hervorgeht, ergibt sich für jedes Korrelationsfeld genau ein Korrekturwert $d_{ij} = (d_{ij\_x}, d_{ij\_y})$. Im Fall, dass jeweils vollständige, rektifizierte Kamerabilder miteinander korreliert werden, ergibt sich also ein einziger, globaler Korrekturwert. Vielfach bedarf es jedoch lokal unterschiedlicher Korrekturen der Abbildungsfunktion, wenn nämlich, wie dies meist der Fall ist, unterschiedliche Bereiche des Messvolumens leicht unterschiedlich abgebildet werden. Bei einer Verfeinerung des erfindungsgemäßen Verfahrens ist daher vorgesehen, dass die rektifizierten Kamerabilder vor Schritt c in jeweils eine Mehrzahl von gleich großen und gleich positionierten Interrogationsfeldern unterteilt werden, die Schritte c und d auf den Interrogationsfeldern durchgeführt werden und die Abbildungsfunktionen in Schritt e in den den unterschiedlichen Interrogationsfeldern zuordenbaren unterschiedlichen räumlichen Bereichen des Messvolumens mit den jeweils zugeordneten, unterschiedlichen Korrekturwerten korrigiert werden. Anstelle des einzigen, globalen Korrekturwertes für jedes Paar von rektifizierten Kamerabildern erhält man also eine der Anzahl von Interrogationsfeldern entsprechende Mehrzahl von Korrekturwerten und kann die Abbildungsfunktion mit der räumlichen Auflösung der Interrogationsfelder lokal unterschiedlich korrigieren. Der Fachmann wird im Einzelfall die erhöhten Rechenanforderungen einerseits und die höhere Genauigkeit der resultierenden Abbildungsfunktionen andererseits abzuwägen haben.

Der Fachmann wird erkennen, dass die zuvor erläuterte Unterteilung der rektifizierten Kamerabilder in Interrogationsfelder lediglich zu einer Diversifizierung der Abbildungsfunktions-Korrektur innerhalb der gewählten Referenzebene führt. Denkbar und in der Praxis häufig vorkommend sind jedoch auch Abweichungen der Abbildungsfunktion, die für verschiedene Referenzebenen im Messvolumen unterschiedlich sind. Um auch diesbezüglich eine Differenzierung der Abbildungsfunktions-Korrektur zu erreichen, ist bei einer Weiterbildung der Erfindung vorgesehen, dass das Verfahren zumindest in den Schritten b bis e mehrfach durchgeführt wird, wobei die Kamerabilder bei jedem Durchlauf in Schritt b in Bezug auf eine andere gemeinsame Referenzebene rektifiziert werden und wobei die Abbildungsfunktionen im Schritt e jeweils nur in dem der jeweiligen Referenzebene zuordenbaren, räumlichen Bereich des Messvolumens mit den jeweils ermittelten Korrekturwerten korrigiert werden. Mit anderen Worten wird das Messvolumen durch die Wahl unterschiedlicher Referenzebenen schichtweise unterteilt, wobei auch die Korrektur der Abbildungsfunktionen entsprechend schichtweise erfolgt. In Kombination mit der zuvor erläuterten Interrogationsfeld-Variante der Erfindung erfolgt also eine Unterteilung des Messvolumens in Sub-Volumina in allen drei Raumrichtungen und eine entsprechend in allen drei Raumrichtungen diversifizierte Korrektur der Abbildungsfunktionen.

Eine weitere vorteilhafte Ausführung des Verfahrens besteht darin, die Korrelationsfelder nicht nur mit den Bildern zu berechnen, die zu einem einzigen Zeitpunkt aufgenommen wurden, sondern entsprechende Korrelationsfelder für mehrere Zeitpunkte zu berechnen und aufeinander zu summieren, um eine bessere Statistik durch mehr Teilchen zu erreichen. Dies gilt insbesondere, wenn das rektifizierte Bild noch in mehrere Unterbereiche aufgeteilt wird. Bei einer Weiterbildung der Erfindung ist daher vorgesehen, dass das erfindungsgemäße Verfahren in den Schritten a bis c mehrfach für mehrere Zeitpunkte durchgeführt wird, die jeweils entsprechenden Korrelationsfelder aufsummiert und dann die Schritte d und e durchgeführt werden.

An eine prinzipielle Grenze stößt das erfindungsgemäße Verfahren, wenn ein klassischer, stereoskopischer Aufbau von drei Kameras involviert ist, d.h. wenn die optischen Achsen aller drei Kameras in derselben Ebene liegen, z.B. wenn alle Kameras entlang einer Linie aufgestellt sind. Eine solche Konstellation wird häufig auch als "inline"-Konstellation bezeichnet.

Bei einer solchen Kamera-Konstellation haben die repräsentativen Geraden in den Korrelationsfeldern dieselbe Winkellage zu ihren Koordinatenachsen, sodass zwar eine Verbesserung der Abbildungsfunktionen, nicht jedoch deren Optimierung erwartet werden kann, d.h. dass die oben erwähnten Gleichungssysteme nicht mehr eindeutig gelöst werden können. Insbesondere, jedoch nicht ausschließlich, um dieser Konstellation gerecht zu werden, kann das erfindungsgemäße Verfahren erweitert werden. Es handelt sich dann um ein Verfahren, wie oben beschrieben, wobei der optische Messaufbau eine erste Kamera, eine zweite Kamera und eine dritte Kamera aufweist, von deren rektifizierten Kamerabildern nur diejenigen der ersten und der zweiten Kamera in die Korrelation und Korrektur der Abbildungsgleichung von Kamera 1 und 2 in Schritten c bis e einbezogen werden, und das sich durch folgende, weitere Schritte auszeichnet:

f) Rektifizieren

- der Kamerabilder der ersten und der zweiten Kamera unter Verwendung der jeweils zugeordneten, in Schritt e korrigierten Abbildungsfunktion und
- des Kamerabildes der dritten Kamera unter Verwendung der zugeordneten, vorkalibrierten Abbildungsfunktion in Bezug auf eine Mehrzahl von gemeinsamen parallelen Referenzebenen,

g) Durchführen, für jede Referenzebene, einer zweidimensionalen Korrelation zwischen dem Produkt aus den rektifizierten Kamerabildern der ersten und der zweiten Kamera mit dem rektifizierten Kamerabild der dritten Kamera und Aufsummieren der resultierenden Korrelationsfelder zur Erzeugung eines Summen-Korrelationsfeldes,
h) Bestimmen des Abstandes des Korrelationsmaximums im Summen-Korrelationsfeld vom Koordinatenursprung des Summen-Korrelationsfeldes als zusätzlichen Korrekturwert,
i) Korrigieren der Abbildungsfunktion der dritten Kamera mit dem ermittelten zusätzlichen Korrekturwert.

Mit anderen Worten wird das erfindungsgemäße Verfahren, wie bisher beschrieben, zunächst auf die Kamerabilder von nur zwei Kameras angewendet. In einem weiteren Schritt werden die Kamerabilder dieser beiden Kameras mit den korrigierten Abbildungsfunktionen rektifiziert. Das Kamerabild der dritten Kamera wird hingegen mit der zugeordneten, ursprünglichen und noch nicht korrigierten Abbildungsfunktion rektifiziert. Die Rektifizierung erfolgt dabei jeweils für eine Mehrzahl von parallelen Referenzebenen, wobei die Korrektur umso präziser (allerdings auch rechenaufwendiger) wird, je enger die gewählten Referenzebenen im Messvolumen verteilt sind. Sodann wird für jede Referenzebene eine zweidimensionale Korrelation, vorzugsweise eine Kreuzkorrelation, durchgeführt, jedoch nicht unmittelbar zwischen rektifizierten Kamerabildern, wie bisher beschrieben. Der erste der beiden Korrelationsterme ist vielmehr das rechnerische Produkt aus den rektifizierten Kamerabildern der ersten und der zweiten Kamera, während der zweite Korrelationsterm dem rektifizierten Kamerabild der dritten Kameras entspricht. Für jede Referenzebene ergibt sich somit ein Korrelationsfeld, welches die Korrelation zwischen besagtem Produkt aus erstem und zweiten rektifizierten Kamerabild einerseits und dem dritten rektifizierten Kamerabild andererseits repräsentiert. Diese Korrelationsfelder werden aufsummiert. Es ergibt sich ein Summen-Korrelationsfeld, das im Fall der Anwendung einer Kreuzkorrelation als Ähnlichkeitsoperator in allgemeiner Form wie folgt geschrieben werden kann:

$$C_{123}\left(d_x, d_y\right) = \sum_z \sum_{x,y} \left\{ \left( Ir_{1,z}(X,Y) Ir_{2,z}(X,Y) \right) Ir_{3,z}\left(X + d_x, Y + d_y\right) \right\},$$

wo $Ir_{i,z}$ das in Bezug auf die jeweilige Referenzebene Z rektifizierte Kamerabild bezeichnet. Der Einfachheit halber wird hier wieder das Beispiel eine Referenzebene in Z-Ebene zurückgegriffen, und die Summierung über Z geschieht üblicherweise z.B. mit einem Abstand von etwa einem Pixel (bzw. Voxel).

Das Summen-Korrelationsfeld weist einen einzigen, eindeutig bestimmbaren Korrelations-Peak auf. Der Abstand (dx,dy) dieses Korrelations-Peaks zum Koordinatenursprung des Summen-Korrelationsfeldes wird sodann als zusätzlicher Korrekturwert bestimmt. Dieser zusätzliche Korrekturwert dient der Korrektur der noch nicht korrigierten Abbildungsfunktion, d.h. derjenigen der dritten Kamera. Auch die beiden bereits vorkorrigierten Abbildungsfunktionen, d.h. die Abbildungsfunktionen der ersten und der zweiten Kamera, können eine zusätzliche Korrektur auf Basis des zusätzlichen Korrekturwertes erfahren. Entsprechende vorteilhafte Korrekturverfahren sind dem Fachmann wiederum bekannt.

Selbstverständlich kann auch das erweiterte Verfahren durch zweidimensionale Diversifizierung der Abbildungsfunktions-Korrektur auf Basis von Interrogationsfeldern weiter verbessert werden. So kann bei einer Weiterbildung des erweiterten Verfahrens vorgesehen sein, dass die rektifizierten Kamerabilder vor Schritt g in jeweils eine Mehrzahl von gleich großen und gleich positionierten Interrogationsfeldern unterteilt werden, die Schritte g und h auf den Interrogationsfeldern durchgeführt werden und die Abbildungsfunktionen in Schritt i in den den unterschiedlichen Interrogationsfeldern zugeordneten, unterschiedlichen räumlichen Bereichen des Messvolumens unterschiedlich, nämlich mit den jeweils zugeordneten, unterschiedlichen Korrekturwerten korrigiert werden. Ebenso können die Berechnungen wiederum auf verschiedenen (parallelen) Referenzebenen erfolgen, um für verschiedene Ebenen im Messvolumen unterschiedliche Korrekturen der Abbildungsgleichung vorzunehmen.

Hinsichtlich der Wirkungen und Vorteile dieser Maßnahme kann auf die obige Erläuterung im Kontext des nicht erweiterten, erfindungsgemäßen Verfahrens verwiesen werden.

Weitere Merkmale und Vorteile der Erfindung ergeben sich aus der nachfolgenden speziellen Beschreibung und den Zeichnungen.

Kurzbeschreibung der Zeichnungen

Es zeigen:

Figur 1:   eine schematische Darstellung einer typischen Anwendungssituation für das erfindungsgemäße Verfahren, zugleich Schritt a des Verfahrens und

Figur 2:   eine schematische Darstellung der Schritte b, c, d1 und d2 des erfindungsgemäßen Verfahrens, die sich an Schritt a von Figur 1 anschließen.

Beschreibung bevorzugter Ausführungsformen

Gleiche Bezugszeichen in den Figuren deuten auf gleiche oder analoge Elemente hin.

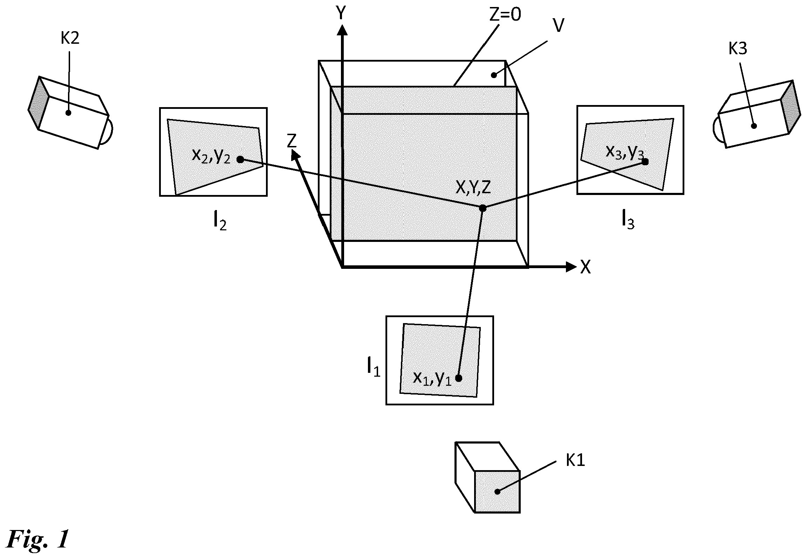

Figur 1 zeigt in stark schematisierter Darstellung eine typische Messsituation, in der eine erfindungsgemäße Kalibrierung anwendbar ist.

Im Zentrum des Aufbaus steht ein Messvolumen V, welches im typischen Anwendungsfall einer Strömungsmessung von einem mit Partikeln beimpften Fluid durchströmt wird. Die Partikel sind so gewählt, dass sie optisch detektierbar sind. Dabei kann es sich beispielsweise um streuende oder fluoreszierende Partikel handeln. Die jeweils erforderlichen Beleuchtungs- und/oder Detektionsdetails sind dem Fachmann bekannt und können jeweils geeignet eingesetzt werden. Für die vorliegende Erfindung spielen diese Details keine Rolle. Ebenso wenig ist eine bewegte Strömung für das erfindungsgemäße Kalibrierverfahren erforderlich.

Jeder Punkt im Messvolumen V ist entsprechend den Raumkoordinaten X, Y, Z identifizierbar. Dies gilt insbesondere für die Positionen der Partikel. In Figur 1 grau hinterlegt ist eine im dargestellten Beispiel willkürlich auf Z=0 gelegte Referenzebene.

Das Messvolumen V wird bei der gezeigten Ausführungsform von drei Kameras K1, K2, K3 unter unterschiedlichen Beobachtungswinkeln betrachtet. Die Wahl von exakt drei Kameras ist hier rein beispielhaft zu verstehen. Das erfindungsgemäße Verfahren ist mit jeder Mehrzahl von Kameras durchführbar.

In Schritt a (entsprechend der anspruchsgemäßen Nomenklatur) des erfindungsgemäßen Verfahrens nehmen alle drei Kameras K1, K2, K3 zeitgleich ein Kamerabild des Messvolumens auf. Es resultieren die in Figur 1 schematisch dargestellten Kamerabilder $I_1$, $I_2$ und $I_3$. Die Kamerabilder $I_1$, $I_2$, $I_3$ zeigen eine gewisse Verzerrung, die sich zum Teil aus rein optischen Eigenschaften, hauptsächlich jedoch aus ihrer geometrischen Relativpositionierung zum Messvolumen ergeben. In Figur 1 ist dies übertrieben dargestellt. Bei dem dargestellten Beispiel ist die Kamera K1 exakt senkrecht zur XY-Ebene positioniert und auf das Zentrum des Messvolumens V ausgerichtet. Dabei ist sie leicht um ihre eigene optische verdreht. Daher zeigt das zugehörige Kamerabild $I_1$ lediglich eine geringfügige perspektivisch rotative Verzerrung. Die in deutlichem Winkel zur XY-Ebene ausgerichteten Kameras K2 und K3 liefern hingegen zusätzlich entsprechend perspektivisch geometrisch verzerrte Kamerabilder $I_2$, $I_3$.

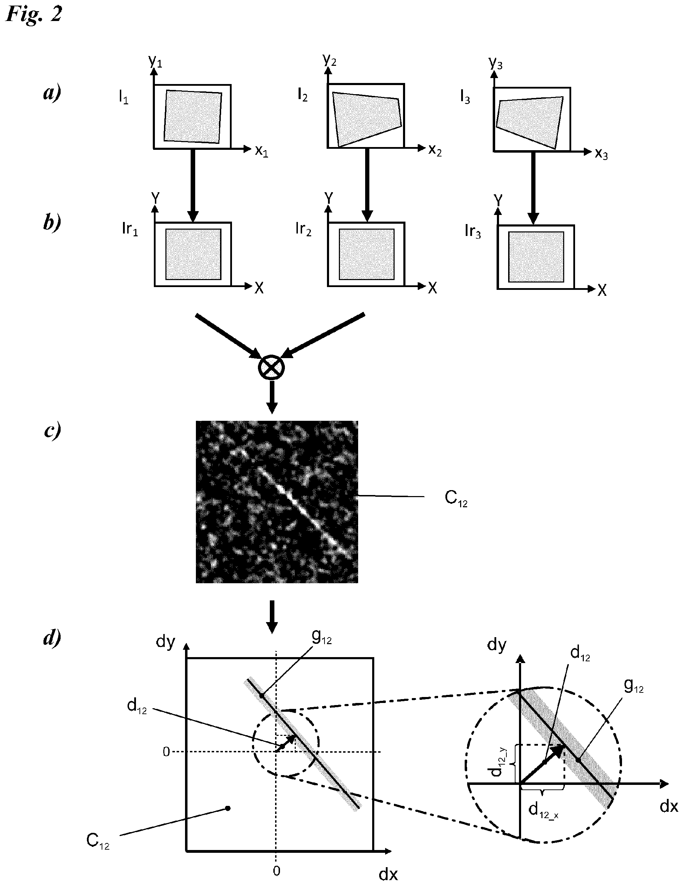

Figur 2 zeigt weitere Schritte des erfindungsgemäßen Verfahrens, die rechnerbasiert und voll automatisch durchgeführt werden. Dieser Abschnitt des erfindungsgemäßen Verfahrens ist typischerweise in Software realisiert.

Ausgangspunkt sind die Kamerabilder $I_1$, $I_2$ und $I_3$. In Schritt b (entsprechend der anspruchsgemäßen Nomenklatur) des erfindungsgemäßen Verfahrens erfolgt eine Rektifizierung der Kamerabilder $I_1$, $I_2$ und $I_3$, die zu den rektifizierten Kamerabildern $Ir_1$, $Ir_2$ und $Ir_3$ führt. Die Rektifizierung hat jeweils in Bezug auf eine definierte Ebene zu erfolgen. Vorteilhafterweise wird im Rahmen des erfindungsgemäßen Verfahrens hierzu die zuvor genannte Referenzebene Z=0 verwendet. Wie der Fachmann erkennt, findet die zu kalibrierende Abbildungsfunktion über diesen Rektifizierungsschritt Eingang in das erfindungsgemäße Verfahren.

Im Schritt c (entsprechend der anspruchsgemäßen Nomenklatur) des erfindungsgemäßen Verfahrens erfolgt eine paarweise Korrelation der rektifizierten Kamerabilder $Ir_1$, $Ir_2$, $Ir_3$, die zu drei Korrelationsfeldern führt, von denen der Übersichtlichkeit halber nur das aus der Korrelation der rektifizierten Kamerabilder $Ir_1$ und $Ir_2$ resultierende Korrelationsfeld $C_{12}$ gezeigt ist. Ein heller Punkt deutet dabei auf einen hohen Korrelationswert hin; ein dunkler Punkt auf einen entsprechend niedrigen Korrelationswert.

Die Korrelationsfelder zeigen vor dem Hintergrund einer im Wesentlichen zufälligen Verteilung von Korrelations-Peaks über die gesamte Korrelationsfeldfläche ein länglich gezogenes "Band", in dem sich die Anzahl von Korrelations-Peaks deutlich häuft.

In Schritt d als Zusammenfassung der Schritte d1 und d2 (gemäß anspruchsgemäßer Nomenklatur) des erfindungsgemäßen Verfahrens wird sodann zu jedem Korrelations-Peak-Band eine repräsentative Gerade sowie ihr Abstand vom Koordinatenursprung des Korrelationsfeldes ermittelt. Der Übersichtlichkeit halber sind wieder nur das Korrelationsfeld $C_{12}$ und die zugeordnete Gerade $g_{12}$ dargestellt. Die Ermittlung der repräsentativen Geraden $g_{12}$ kann mit üblichen Bildverarbeitungsalgorithmen erfolgen.

Weiter wird der Abstand der repräsentativen Geraden vom Ursprung des jeweiligen Korrelationsfeldes berechnet. Es resultiert jeweils ein zugeordneter Abstandsvektor, d.h. im Fall des dargestellten Korrelationsfeldes $C_{12}$ der Abstandsvektor $d_{12}$ mit seinen Komponenten $d_{12\_x}$ und $d_{12\_y}$ parallel zur dx- bzw. dy-Koordinatenachse. Dieser Vektor beginnt im jeweiligen Korrelationsfeld-Ursprung und steht senkrecht auf der zugeordneten repräsentativen Geraden.

Im letzten, in Figur 2 nicht mehr dargestellten Schritt des erfindungsgemäßen Verfahrens (Schritt e entsprechend anspruchsgemäßer Nomenklatur) werden die so ermittelte Abstandsvektoren sodann zur Korrektur der Abbildungsfunktionen $M_1$, $M_2$ und $M_3$ genutzt. Der Fachmann wird verstehen, dass bei Verwendung von mehr oder weniger Kameras entsprechend mehr oder weniger Korrelationen durchzuführen sind, wobei jedoch die Behandlung der einzelnenn Korrelationsfelder identisch zum oben geschilderten Beispiel und die Korrektur der Abbildungsfunktionen entsprechend erfolgt.

Im Fall der im allgemeinen Teil der Beschreibung erläuterten "inline"-Konstellation von Kameras führt die erfindungsgemäße Korrektur zwar zu einer Verbesserung der Abbildungsfunktionen, jedoch nicht zwingend zu ihrer Optimierung. Das oben erläuterte Verfahren wird daher nur auf zwei der drei Kameras K1, K2, K3 angewendet, deren Abbildungsfunktionen auch entsprechend korrigiert werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

Bezugszeichenliste

| | |
|---|---|
| V | Messvolumen |
| X, Y, Z | Raumkoordinaten in V |
| K1, K2, K3 | Kameras |
| $I_1$, $I_2$, $I_3$ | Kamarabilder von K1, K2 bzw. K3 |
| $Ir_1$, $Ir_2$, $Ir_3$ | rektifizierte Kamarabilder von K1, K2 bzw. K3 |
| x, y | Flächenkoordinaten in $I_1$, $I_2$, $I_3$ und $Ir_1$, $Ir_2$, $Ir_3$ |

$C_{12}$       Korrelationsfeld
dx, dy       Flächenkoordinaten in $C_{12}$
$g_{12}$       repräsentative Gerade
$d_{12}$       Abstand von $g_{12}$(vektoriell)

**Patentansprüche**

1. Verfahren zum Kalibrieren eines optischen Messaufbaus mit einem mit Partikeln beimpften Messvolumen (V) und mit wenigstens zwei Kameras (K1, K2, K3)), mittels derer das Messvolumen (V) unter unterschiedlichen Betrachtungswinkeln mit je einer aus einer Vorkalibrierung bekannten Abbildungsfunktion abbildbar ist, umfassend den Schritt:

     a) zeitgleiches Abbilden des Messvolumens (V) mittels der Kameras (K1, K2, K3) zur Erzeugung je eines Kamerabildes ($I_1$, $I_2$, $I_3$) für jede Kamera (K1, K2, K3),

     **gekennzeichnet durch**
     die weiteren Schritte:

     b) Rektifizieren jedes Kamerabildes ($I_1$, $I_2$, $I_3$) in Bezug auf eine gemeinsame Referenzebene im Messvolumen (V) unter Verwendung der jeweils zugeordneten, vorkalibrierten Abbildungsfunktion,
     c) Durchführen einer zweidimensionalen Korrelation für wenigstens ein Paar von rektifizierten Kamerabildern ($Ir_1$, $Ir_2$, $Ir_3$) zur Erzeugung einer entsprechenden Anzahl von Korrelationsfeldern ($C_{12}$), wobei jedes Korrelationsfeld ($C_{12}$) ein länglich geformtes Korrelationsmaxima-Band zeigt,
     d) für jedes Korrelationsfeld ($C_{12}$):

         d1) Reduzieren des Korrelationsmaxima-Bandes auf eine für dieses repräsentative Gerade ($g_{12}$),
         d2) Ermitteln des Abstandes ($d_{12}$) dieser repräsentativen Geraden ($g_{12}$) vom Koordinatenursprung des Korrelationsfeldes ($C_{12}$) als Korrekturwert,

     e) Korrigieren der Abbildungsfunktionen derjenigen Kameras (K1, K2, K3), deren rektifizierte Kamerabilder ($Ir_1$, $Ir_2$, $Ir_3$) in die Korrelationen in Schritt c einbezogen waren, mit den ermittelten Korrekturwerten.

2. Verfahren nach Anspruch 1,
     **dadurch gekennzeichnet,**
     **dass** die rektifizierten Kamerabilder ($Ir_1$, $Ir_2$, $Ir_3$) vor Schritt c in jeweils eine Mehrzahl von gleich großen und gleich positionierten Interrogationsfeldern unterteilt werden, die Schritte c und d auf den Interrogationsfeldern durchgeführt werden und die Abbildungsfunktionen in Schritt e in den den unterschiedlichen Interrogationsfeldern zugeordneten, unterschiedlichen räumlichen Bereichen des Messvolumens (V) mit den jeweils zugeordneten, unterschiedlichen Korrekturwerten korrigiert werden.

3. Verfahren nach einem der vorangehenden Ansprüche,
     **dadurch gekennzeichnet,**
     **dass** das Verfahren zumindest in den Schritten b bis e mehrfach durchgeführt wird, wobei die Kamerabilder ($I_1$, $I_2$, $I_3$) bei jedem Durchlauf in Schritt b in Bezug auf eine andere gemeinsame Referenzebene rektifiziert werden und wobei die Abbildungsfunktionen in Schritt e jeweils nur in dem der jeweiligen Referenzebene zugeordneten, räumlichen Bereich des Messvolumens (V) mit den jeweils ermittelten Korrekturwerten korrigiert werden.

4. Verfahren nach einem der vorangehenden Ansprüche,
     **dadurch gekennzeichnet,**
     **dass** das Verfahren in den Schritten a bis c mehrfach für mehrere Zeitpunkte durchgeführt wird, die jeweils entsprechenden Korrelationsfelder aufsummiert werden und dann das Verfahren in den Schritten d und e durchgeführt wird.

5. Verfahren nach einem der vorangehenden Ansprüche, wobei der optische Messaufbau eine erste Kamera (K1), eine zweite Kamera (K2) und eine dritte Kamera (K3) aufweist, von deren rektifizierten Kamerabildern ($Ir_1$, $Ir_2$) nur diejenigen der ersten und der zweiten Kamera (K1, K2) in die Korrelation und Korrektur von Schritt c bis e einbezogen werden,

**gekennzeichnet durch** die weiteren Schritte:

f) Rektifizieren

- der Kamerabilder ($I_1$, $I_2$) der ersten und der zweiten Kamera (K1, K2) unter Verwendung der jeweils zugeordneten, in Schritt e korrigierten Abbildungsfunktion und
- des Kamerabildes ($I_3$) der dritten Kamera (K3) unter Verwendung der zugeordneten, vorkalibrierten Abbildungsfunktion
in Bezug auf eine Mehrzahl von gemeinsamen parallelen Referenzebenen,

g) Durchführen, für jede Referenzebene, einer zweidimensionalen Korrelation zwischen dem Produkt aus den rektifizierten Kamerabildern ($Ir_1$, $Ir_2$) der ersten und der zweiten Kamera (K1, K2) mit dem rektifizierten Kamerabild ($Ir_3$) der dritten Kamera (K3) und Aufsummieren der resultierenden Korrelationsfelder zur Erzeugung eines Summen-Korrelationsfeldes,

h) Bestimmen des Abstandes des Korrelationsmaximums im Summen-Korrelationsfeld vom Koordinatenursprung des Summen-Korrelationsfeldes als zusätzlichen Korrekturwert,

i) Korrigieren der Abbildungsfunktion der dritten Kamera (K3) mit dem ermittelten zusätzlichen Korrekturwert.

6. Verfahren nach Anspruch 5,
   **dadurch gekennzeichnet,**
   **dass** in Schritt i zudem die in Schritt e korrigierten Abbildungsfunktionen der ersten und/oder der zweiten Kamera (K1, K2) mit dem ermittelten zusätzlichen Korrekturwert erneut korrigiert werden.

7. Verfahren nach einem der Ansprüche 5 bis 6,
   **dadurch gekennzeichnet,**
   **dass** die rektifizierten Kamerabilder ($Ir_1$, $Ir_2$, $Ir_3$) vor Schritt g in jeweils eine Mehrzahl von gleich großen und gleich positionierten Interrogationsfeldern unterteilt werden, die Schritte g und h auf den Interrogationsfeldern durchgeführt werden und die Abbildungsfunktionen in Schritt i in den den unterschiedlichen Interrogationsfeldern zugeordneten, unterschiedlichen räumlichen Bereichen des Messvolumens (V) mit den jeweils zugeordneten, unterschiedlichen Korrekturwerten korrigiert werden.

8. Verfahren nach einem der vorangehenden Ansprüche,
   **dadurch gekennzeichnet,**
   **dass** wenigstens eine Korrelation als Kreuzkorrelation der allgemeinen Form

$$C_{ij}(dx, dy) = \sum_{x,y} Ir_i(X, Y) Ir_j(X + dx, Y + dy)$$

durchgeführt wird.


**Claims**

1. A method for calibrating an optical measurement set-up with a measurement volume (V) seeded with particles and with at least two cameras (K1, K2, K3), by means of which the measurement volume (V) can be mapped from different observation angles, in each case with a mapping function known from a pre-calibration,
   said method comprising the following step:

   a) simultaneously mapping the measurement volume (V) by means of the cameras (K1, K2, K3) in order to produce a camera image ($I_1$, $I_2$, $I_3$) for each camera (K1, K2, K3).

   **characterized by**
   the further steps:

   b) rectifying each camera image ($I_1$, $I_2$, $I_3$) in relation to a common reference plane in the measurement volume (V) with use of the associated, pre-calibrated mapping function,
   c) performing a two-dimensional correlation for at least one pair of rectified camera images ($Ir_1$, $Ir_2$, $Ir_3$) in order

to produce a corresponding number of correlation fields ($C_{12}$), wherein each correlation field ($C_{12}$) presents an elongate correlation maxima band,

d) for each correlation field ($C_{12}$):

d1) reducing the correlation maxima band to a straight line ($g_{12}$) representative of this band,

d2) determining the distance ($d_{12}$) of this representative straight line ($g_{12}$) from the coordinate origin of the correlation field ($C_{12}$) as a correction value,

e) using the determined correction values to correct the mapping functions of those cameras (K1, K2, K3) for which rectified camera images ($Ir_1$, $Ir_2$, $Ir_3$) were included in the correlations in Step c.

**2.** The method according to claim 1,
**characterized in that**
the rectified camera images ($Ir_1$. $Ir_2$, $Ir_3$) before Step c are each divided into a plurality of equally sized and equally positioned interrogation fields, Steps c and d are performed on the interrogation fields and the mapping functions in Step e are corrected in the different spatial regions of the measurement volume (V) with which the different interrogation fields are associated, using the respectively associated, different correction values.

**3.** The method according to any of the preceding claims,
**characterized in that**
the method is performed multiple times, at least from Steps b to e, wherein the camera images ($I_1$, $I_2$, $I_3$) are rectified during each pass in Step b in relation to another common reference plane and wherein the mapping functions in Step e are each corrected using the respectively determined correction values only in the spatial region of the measurement volume (V) with which the respective reference plane is associated.

**4.** The method according to any of the preceding claims,
**characterized in that**
the method is performed from Steps a to c multiple times for multiple points in time, the respectively corresponding correlation fields are summed and then Steps d and e of the method are performed.

**5.** The method according to any of the preceding claims, wherein the optical measurement set-up has a first camera (K1), a second camera (K2) and a third camera (K3), of whose rectified camera images ($Ir_1$, $Ir_2$) only those from the first and second camera (K1, K2) are involved in the correlation and correction of Steps c to e,
**characterized by** the further steps:

f) rectification

- of the camera images ($I_1$, $I_2$) from the first and second camera (K1, K2) using the respectively associated mapping function corrected in Step e and
- of the camera image ($I_3$) from the third camera (K3) using the associated, pre-calibrated mapping function in relation to a plurality of common parallel reference planes,

g) performing, for each reference plane, a two-dimensional correlation between the product of the rectified camera images ($Ir_1$, $Ir_2$) from the first and from the second camera (K1, K2) with the rectified camera image ($Ir_3$) from the third camera (K3) and summing the resulting correlation fields to produce a sum correlation field,
h) determining the distance of the correlation maximum in the sum correlation field from the coordinate origin of the sum correlation field as an additional correction value,
i) correcting the mapping function of the third camera (K3) using the additional correction value that was determined.

**6.** The method according to claim 5,
**characterized in that**
in Step i the mapping functions of the first and/or of the second camera (K1, K2) corrected in Step e are corrected once again using the additional correction value that was determined.

**7.** The method according to either of the claims 5 to 6,
**characterized in that**
the rectified camera images ($Ir_1$, $Ir_2$, $Ir_3$) before Step g are each divided into a plurality of equally sized and equally positioned interrogation fields, Steps g and h are performed on the interrogation fields and the mapping functions in Step i are corrected in the different spatial regions of the measurement volume (V) associated with the different interrogation fields, using the respectively associated, different correction values.

8.  The method according to any of the preceding claims,
    **characterized in that**
    at least one correlation is performed as a cross-correlation of the general form

$$C_{ij}(dx, dy) = \sum_{x,y} Ir_i(X, Y) Ir_j(X + dx, Y + dy)$$

## Revendications

1.  Procédé d'étalonnage d'un système de mesure optique comportant un volume de mesure (V) inoculé de particules et au moins deux caméras (K1, K2, K3)) permettant de visualiser le volume de mesure (V) sous différents angles de vue au moyen d'une fonction d'imagerie connue chacune grâce à un préétalonnage, comprenant l'étape :

    a) imagerie simultanée du volume de mesure (V) au moyen des caméras (K1, K2, K3) pour générer respectivement une image de caméra ($I_1$, $I_2$, $I_3$) pour chaque caméra (K1, K2, K3),

    **caractérisé par**
    les autres étapes:

    b) rectification de chaque image de caméra ($I_1$, $I_2$, $I_3$) par rapport à un plan de référence commun dans le volume de mesure (V) au moyen de la fonction d'imagerie préétalonnée respectivement associée,
    c) établissement d'une corrélation bidimensionnelle d'au moins deux images de caméra rectifiées ($Ir_1$, $Ir_2$, $Ir_3$) pour générer un nombre correspondant de champs de corrélation ($C_{12}$), chaque champ de corrélation ($C_{12}$) montrant une bande maximale de corrélation allongée,
    d) pour chaque champ de corrélation ($C_{12}$) :

    d1) réduction de la bande maximale de corrélation à une droite représentative ($g_{12}$) pour celle-ci,
    d2) détermination de la distance ($d_{12}$) entre ces droites représentatives ($g_{12}$) et l'origine des coordonnées du champ de corrélation ($C_{12}$) en tant que valeur de correction,

    e) correction des fonctions d'imagerie des caméras (K1, K2, K3) dont les images rectifiées ($Ir_1$, $Ir_2$, $Ir_3$) étaient incluses dans les corrélations à l'étape c à l'aide des valeurs de correction déterminées.

2.  Procédé selon la revendication 1,
    **caractérisé en ce que**
    chacune des images de caméra rectifiées ($Ir_1$, $Ir_2$, $Ir_3$) est divisée, avant l'étape c, en une pluralité de champs d'interrogation de grandeur égale, positionnés de manière identique, les étapes c et d sont réalisées sur les champs d'interrogation et les fonctions d'imagerie sont corrigées à l'étape e dans les différentes zones spatiales du volume de mesure (V), associées aux différents champs d'interrogation, à l'aide des différentes valeurs de correction respectivement associées.

3.  Procédé selon l'une des revendications précédentes,
    **caractérisé en ce que**
    le procédé est réalisé plusieurs fois au moins dans les étapes b à e, les images de caméra ($I_1$, $I_2$, $I_3$) étant rectifiées à chaque passage, à l'étape b, par rapport à un autre plan de référence commun, et chacune des fonctions d'imagerie étant corrigée, à l'étape e, uniquement dans la zone spatiale du volume de mesure (V) associée au plan de référence correspondant, à l'aide des valeurs de correction déterminées correspondantes.

4.  Procédé selon l'une des revendications précédentes,
    **caractérisé en ce que**
    le procédé est réalisé dans les étapes a à c plusieurs fois pour plusieurs moments, les champs de corrélation correspondants sont additionnés et le procédé est ensuite réalisé dans les étapes d et e.

**5.** Procédé selon l'une des revendications précédentes, suivant lequel le système de mesure optique comporte une première caméra (K1), une deuxième caméra (K2) et une troisième caméra (K3), parmi les images de caméra rectifiées (Ir$_1$, Ir$_2$) desquelles seules celles de la première et de la deuxième caméra (K1, K2) sont incluses dans la corrélation et la correction, de l'étape c à l'étape e,
**caractérisé par** les autres étapes :

    f) rectification

        - des images de caméra (I$_1$, I$_2$) de la première et de la deuxième caméra (K1, K2) au moyen de la fonction d'imagerie corrigée à l'étape e respectivement associée et
        - de l'image de caméra (I$_3$) de la troisième caméra (K3) au moyen de la fonction d'imagerie préétalonnée respectivement associée
        par rapport à une pluralité de plans de référence communs parallèles,

    g) réalisation, pour chaque plan de référence, d'une corrélation bidimensionnelle entre le produit des images de caméra rectifiées (Ir$_1$, Ir$_2$) de la première et de la deuxième caméra (K1, K2) et l'image de caméra rectifiée (Ir$_3$) de la troisième caméra (K3) et addition des champs de corrélation qui en résultent pour obtenir un champ de corrélation total,
    h) détermination de la distance entre la corrélation maximale dans le champ de corrélation total et l'origine des coordonnées du champ de corrélation total en tant que valeur de correction supplémentaire,
    i) correction de la fonction d'imagerie de la troisième caméra (K3) à l'aide de la valeur de correction supplémentaire déterminée.

**6.** Procédé selon la revendication 5,
**caractérisé en ce que**
les fonctions d'imagerie de la première et/ou de la deuxième caméra (K1, K2) corrigées à l'étape e sont également corrigées à nouveau à l'étape i à l'aide de la valeur de correction supplémentaire déterminée.

**7.** Procédé selon l'une des revendications 5 à 6,
**caractérisé en ce que**
chacune des images de caméra rectifiées (Ir$_1$, Ir$_2$, Ir$_3$) est divisée, avant l'étape g, en une pluralité de champs d'interrogation de grandeur égale, positionnés de manière identique, les étapes g et h sont réalisées sur les champs d'interrogation et les fonctions d'imagerie sont corrigées à l'étape i dans les différentes zones spatiales du volume de mesure (V), associées aux différents champs d'interrogation, à l'aide des différentes valeurs de correction respectivement associées.

**8.** Procédé selon l'une des revendications précédentes,
**caractérisé en ce**
**qu'**au moins une corrélation est réalisée en tant que corrélation croisée de la forme générale

$$C_{ij}(dx, dy) = \sum_{x,y} Ir_i(X, Y) Ir_j(X + dx, Y + dy)$$

.

*Fig. 1*

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1926049 B1
- EP 1460433 B1